# EUROPEAN PATENT APPLICATION

(11) **EP 4 567 919 A1**
(43) Date of publication of application: **11.06.2025**
(21) Application number: 24217350.8
(22) Date of filing: 04.12.2024
(51) Int. Cl.: H01M 4/133, H01G 11/28, H01M 4/13, H01M 4/36, H01M 4/62, H01M 10/0525, H01M 4/02

(54) **ELECTRODES OF RECHARGEABLE LITHIUM BATTERIES AND RECHARGEABLE LITHIUM BATTERIES**

(30) Priority: 06.12.2023 KR 20230175693
(71) Applicant: SAMSUNG SDI CO., LTD., Yongin-si, Gyeonggi-do 17084 (KR); Ulsan National Institute of Science and Technology (UNIST), Eonyang-eup Ulju-gun Ulsan 44919 (KR)
(72) Inventor: HWANG, Taehyun, 17084 Gyeonggi-do (KR); KA, Bokhyun, 17084 Gyeonggi-do (KR); KIM, Ho, 17084 Gyeonggi-do (KR); JEON, Seongho, 17084 Gyeonggi-do (KR); NAM, Junghyun, 17084 Gyeonggi-do (KR); SEOL, Jongheon, 17084 Gyeonggi-do (KR); SONG, Hyun-Kon, 44919 Ulsan (KR); LEE, Myeong-Hee, 44919 Ulsan (KR); KIM, Seong Su, 44919 Ulsan (KR); JEONG, Jihong, 44919 Ulsan (KR)
(74) Representative: Michalski Hüttermann & Partner Patentanwälte mbB

(57) **Abstract**

Disclosed are an electrode for a rechargeable lithium battery, and a rechargeable lithium battery including the same, the electrode including a current collector, an electrode active material layer on the current collector, and a functional layer, wherein the functional layer includes a lithium-containing polyoxazoline.

## Description

### BACKGROUND

### 1. Field

Electrodes for rechargeable lithium batteries and rechargeable lithium batteries are disclosed.

### 2. Description of the Related Art

Due to worldwide rapid growth of electric vehicles, use of efficient renewable energy in response to climate change, widespread use of Internet of Things (IoT) devices, etc., the demand for rechargeable lithium batteries is rapidly increasing. As the demand for technologies for rapid-charging, while securing energy density, is also rapidly increasing, various relevant studies are actively underway. Among these various attempts, research on placing an active material comprising an electrode more thickly on a current collector to form thick film electrodes and thus increase energy storage per unit volume is said to be a relatively easy approach. However, how to manufacture such thick film electrodes may not only be a challenge, but also how to solve a problem that the thick film electrodes make it more difficult to move ions and electrons in a thickness direction is another challenge. For example, because the rapid-charging situations utilize rapid movement of lithium ions, lithium precipitation inevitably occurs at negative electrodes due to current concentration and overpotential, which would benefit from a solution.

### SUMMARY

By securing reversibility of lithium deposited on a negative electrode during rapid charging, rapid charging cycle-life characteristics of a rechargeable lithium battery are improved, and cycle-life stability of the rechargeable lithium battery is improved through a solid-electrolyte-interface (SEI) modification.

In some embodiments, an electrode for a rechargeable lithium battery includes a current collector, an electrode active material layer on the current collector, and a functional layer, wherein the functional layer includes a lithium-containing polyoxazoline.

In some embodiments, a rechargeable lithium battery includes the aforementioned electrode and an electrolyte.

According to some embodiments, the reversibility of lithium deposited on the rapidly-charged battery electrode is improved, thereby improving the cycle-life characteristics of the rechargeable lithium battery under rapid charging conditions, and the cycle-life stability of the rechargeable lithium battery can be improved through the SEI film modification.

### BRIEF DESCRIPTION OF THE DRAWINGS

The accompanying drawings, together with the specification, illustrate embodiments of the subject matter of the present disclosure, and, together with the description, serve to explain principles of embodiments of the subject matter of the present disclosure.
FIG. 1-is a perspective view schematically showing a rechargeable lithium battery according to some embodiments.
FIGS. 2-3 are cross-sectional views schematically showing rechargeable lithium batteries according to some embodiments.
FIG. 4 is a perspective view schematically showing a rechargeable lithium battery according to some embodiments.
FIGS. 5-6 are infrared spectroscopy (IR) graphs of the functional polymer (Li-POX) and POX prepared in Example 1.
FIG. 7 shows ToF-SIMS Depth analysis results for the rechargeable lithium battery cells of Example 1 and Comparative Example 1, and is a graph showing a change in components of the SEI film before and after formation.
FIG. 8 shows cycle-life characteristics of Example 1 and Comparative Example 1 under rapid charging conditions, and is a graph showing the specific discharge capacity according to the number of cycles.

### DETAILED DESCRIPTION

Hereinafter, example embodiments will be described in more detail so that those of ordinary skill in the art can easily implement them. However, the subject matter of this disclosure may be embodied in many different forms and is not construed as limited to the example embodiments set forth herein.

The terminology used herein is used to describe embodiments only, and is not intended to limit the present disclosure. The singular expression includes the plural expression unless the context clearly dictates otherwise.

As used herein, "combination thereof" means a mixture, a laminate, a composite, a copolymer, an alloy, a blend, a reaction product, and/or the like of the constituents.

Herein, it should be understood that terms such as "comprises," "includes," or "have" are intended to designate the presence of an embodied feature, number, step, element, or a combination thereof, but it does not preclude the possibility of the presence or addition of one or more other features, number, step, element, or a combination thereof.

In the drawings, the thickness of layers, films, panels, regions, etc., may be exaggerated for clarity and like reference numerals designate like elements throughout the specification. It will be understood that if an element such as a layer, film, region, or substrate is referred to as being "on" another element, it can be directly on the other element or intervening elements may also be present. In contrast, if an element is referred to as being "directly on" another element, there are no intervening elements present.

In embodiments, "layer" herein includes not only a shape on the whole surface if viewed from a plan view, but also a shape on a partial surface.

The average particle diameter may be measured by any suitable method generally used in the art, for example, by a particle size analyzer, and/or by a transmission electron microscopic image and/or a scanning electron microscopic image. In embodiments, it is possible to obtain an average particle diameter value by measuring using a dynamic light scattering method, performing data analysis, counting the number of particles for each particle size range, and calculating from this. Unless otherwise defined, the average particle diameter may mean the diameter (D₅₀) of particles having a cumulative volume of 50 volume% in the particle size distribution. As used herein, if a definition is not otherwise provided, the average particle diameter means a diameter (D₅₀) of particles having a cumulative volume of 50 volume% in the particle size distribution that is obtained by measuring the size (diameter or major axis length) of about 20 particles at random in a scanning electron microscope image.

Herein, "or" is not to be construed as an exclusive meaning, for example, "A or B" is construed to include A, B, A+B, and the like.

"Metal" is interpreted as a concept including ordinary metals, transition metals and metalloids (semi-metals).

### Electrode for Rechargeable Lithium Battery

In some embodiments, an electrode for a rechargeable lithium battery includes a current collector, an electrode active material layer on the current collector, and a functional layer, wherein the functional layer includes a lithium-containing polyoxazoline.

The functional layer may be on the electrode active material layer and/or between the current collector and the electrode active material layer. As an example, the electrode may include a current collector, an electrode active material layer on the current collector, and a functional layer on the electrode active material layer. The functional layer may be a type (or kind) of coating layer including a functional polymer. By introducing the aforementioned functional layer in the electrode, physical strength can be improved and the shape of lithium precipitation can be induced into a uniform (e.g., substantially uniform) film form rather than a dendrite form, and reversibility of precipitated lithium, which is a ratio of desorbed lithium metal to electrodeposited lithium metal, can be improved. Furthermore, the functional polymer of the functional layer can act as a captor of lithium salts and/or anions and thus accordingly, the components of SEI generated during the battery formation process can be affected, for example, LiF-rich SEI can be induced, and through this, the cycle-life stability of the battery can be improved.

A thickness of the functional layer is not particularly limited, but in some embodiments, it may be as thin as several micrometers, or several to hundreds of nanometers, and accordingly, reversibility of the precipitated lithium can be increased without increasing the overall thickness and volume of the battery. The thickness of the functional layer may be, for example, about 5 nm to about 900 nm, about 5 nm to about 700 nm, about 10 nm to about 500 nm, or about 20 nm to about 300 nm. The thickness of the functional layer may be measured through Scanning Electron Microscope images of the cross-section of the electrode.

The functional layer can be introduced into the electrode by various suitable methods, for example, it can be introduced by a general coating method, and for example, it can be coated by an electrospinning method. If coating the functional layer using the electrospinning method, a very thin and strong functional layer can be introduced.

The lithium-containing polyoxazoline includes lithium ions, unlike general polyoxazoline. The polyoxazoline and lithium may be chemically bound and/or physically bound, for example, an oxygen or nitrogen group in polyoxazoline may be bound (e.g., chemically bound or physically bound) to a lithium cation. General polyoxazoline, which does not include lithium, does not have the ability to transport lithium ions, and thus, if it is introduced into the functional layer within the electrode plate, it may act as resistance (e.g., it may increase electrical resistance). The lithium-containing polyoxazoline according to some embodiments has excellent lithium ion transfer performance, and thus if it is introduced into the functional layer, it not only increases the reversibility of lithium deposited during rapid charging, but also improves lithium ionic conductivity, improving battery performance, and, in some embodiments, battery performance can be further improved by adjusting the SEI components to LiF-rich SEI.

The lithium-containing polyoxazoline may be, for example, a polyoxazoline initiated with a lithium salt. For example, the lithium-containing polyoxazoline may be polymerized by dissolving a lithium salt in a monomer solution and then treating the solution at about 30 °C to about 100 °C for about 24 to about 72 hours.

Herein, the lithium salt may include, for example, LiPF₆, LiBF₄, LiSbF₆, LiAsF₆, LiClO₄, LiAlO₂, LiAlCl₄, LiPO₂F₂, LiCl, Lil, LiFSI, LiTFSI, LiOTf, LiBOB, LiDFOB, or a combination thereof. In embodiments, a concentration of lithium salt added to the monomer solution may be about 1 M to about 5 M, or about 3 M to about 4 M.

The lithium-containing polyoxazoline may, for example, include lithium-containing poly(2-alkyl-2-oxazoline), lithium-containing poly(2-aryl-2-oxazoline), or a combination thereof. Herein, the alkyl (e.g., the alkyl group of lithium-containing poly(2-alkyl-2-oxazoline)) may be a substituted or unsubstituted C1 to C10 alkyl group or a substituted or unsubstituted C1 to C5 alkyl group. The aryl (e.g., the aryl group of lithium-containing poly(2-aryl-2-oxazoline)) may be a substituted or unsubstituted C6 to C20 aryl group or a substituted or unsubstituted C6 to C12 aryl group.

For example, the lithium-containing polyoxazoline may be lithium-containing poly(2-methyl-2-oxazoline), lithium-containing poly(2-ethyl-2-oxazoline), lithium-containing poly(2-propyl-2-oxazoline), lithium-containing poly(2-isopropyl-2-oxazoline), lithium-containing poly(2-cyclopropyl-2-oxazoline), or a combination thereof.

A weight average molecular weight (Mw) of the lithium-containing polyoxazoline may be about 500 g/mol to about 500,000 g/mol, for example, about 10,000 g/mol to about 70,000 g/mol. In embodiments, the polydispersity (PDI; M_{w}/Mₙ) of the lithium-containing polyoxazoline may be, for example, about 1 to about 4, for example, about 1.2 to about 1.8 or about 3 to about 4.

The electrode for a rechargeable lithium battery according to some embodiments may be a positive electrode or a negative electrode, and for example, it may be a negative electrode. By introducing the functional layer in the negative electrode, the reversibility of lithium precipitated during rapid charging can be improved and thus cycle-life characteristics under metal charging conditions (or rapid charging conditions) can be dramatically improved.

If the electrode is a negative electrode, the current collector may be a negative electrode current collector, and the electrode active material layer may be referred to as a negative electrode active material layer. In embodiments, as another example, the electrode active material layer may be a negative electrode coating layer used in a precipitation-type negative electrode.

### Negative Current Collector

The negative electrode current collector may include, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), and/or an alloy thereof, and may be in the form of a foil, sheet, and/or foam. A thickness of the negative electrode current collector may be, for example, about 1 µm to about 20 µm, about 5 µm to about 15 µm, or about 7 µm to about 10 µm.

### Negative Electrode Active Material Layer

The negative electrode active material layer includes a negative electrode active material, and may optionally further include a binder, a conductive material (e.g., an electrically conductive material), or a combination thereof.

### Negative Electrode Active Material

The negative electrode active material may include a material that reversibly intercalates/deintercalates lithium ions, a lithium metal, a lithium metal alloy, a material capable of doping/dedoping lithium, and/or transition metal oxide.

The material that reversibly intercalates/deintercalates lithium ions may include, for example crystalline carbon, amorphous carbon, or a combination thereof as a carbon-based negative electrode active material. The crystalline carbon may be irregular, and/or sheet, flake, spherical, and/or fiber shaped natural graphite and/or artificial graphite. The amorphous carbon may be a soft carbon, a hard carbon, a mesophase pitch carbonization product, calcined coke, and/or the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material and/or a Sn-based negative electrode active material. The Si-based negative electrode active material may include silicon, a silicon-carbon composite, SiOₓ (0 < x < 2), a Si-Q alloy (wherein Q is an element selected from an alkali metal, an alkaline-earth metal, a Group 13 element, a Group 14 element (excluding Si), a Group 15 element, a Group 16 element, a transition metal, a rare earth element, and a combination thereof, for example Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof), or a combination thereof. The Sn-based negative electrode active material may be Sn, SnO₂, a Sn alloy, or a combination thereof.

The silicon-carbon composite may be a composite of silicon and amorphous carbon. An average particle diameter (D₅₀) of the silicon-carbon composite particles may be, for example, about 0.5 µm to about 20 µm. According to some embodiments, the silicon-carbon composite may be in the form of silicon particles and amorphous carbon coated on the surface of the silicon particles. For example, it may include a secondary particle (core) in which silicon primary particles are assembled and an amorphous carbon coating layer (shell) on the surface of the secondary particle. The amorphous carbon may also be present between the silicon primary particles, for example, the silicon primary particles may be coated with amorphous carbon. The secondary particles may exist dispersed in an amorphous carbon matrix.

The silicon-carbon composite may further include crystalline carbon. For example, the silicon-carbon composite may include a core including crystalline carbon and silicon particles and an amorphous carbon coating layer on the surface of the core. The crystalline carbon may be artificial graphite, natural graphite, or a combination thereof. The amorphous carbon may include soft carbon and/or hard carbon, a mesophase pitch carbonized product, and/or calcined coke.

If the silicon-carbon composite includes silicon and amorphous carbon, a silicon content may be about 10 wt% to about 50 wt% and a content of amorphous carbon may be about 50 wt% to about 90 wt% based on 100 wt% of the silicon-carbon composite. In embodiments, if the composite includes silicon, amorphous carbon, and crystalline carbon, a silicon content may be about 10 wt% to about 50 wt%, a content of crystalline carbon may be about 10 wt% to about 70 wt%, and a content of amorphous carbon may be about 20 wt% to about 40 wt% based on 100 wt% of the silicon-carbon composite.

In embodiments, a thickness of the amorphous carbon coating layer may be about 5 nm to about 100 nm. An average particle diameter (D₅₀) of the silicon particles (primary particles) may be about 10 nm to about 1 µm, or about 10 nm to about 200 nm. The silicon particles may exist as silicon alone, in the form of a silicon alloy, and/or in an oxidized form. The oxidized form of silicon may be represented by SiOₓ (0<x<2). At this time, the atomic content ratio of Si:O, which indicates a degree of oxidation, may be about 99:1 to about 33:67. As used herein, if a definition is not otherwise provided, an average particle diameter (D₅₀) indicates a particle where an accumulated volume is about 50 volume% in a particle distribution.

The Si-based negative electrode active material and/or Sn-based negative electrode active material may be mixed together with the carbon-based negative electrode active material. If the Si-based negative electrode active material and/or Sn-based negative electrode active material and the carbon-based negative electrode active material are mixed together and used, the mixing ratio may be a weight ratio of about 1:99 to about 90:10.

### Binder

The binder serves to well adhere the negative electrode active material particles to each other and also to adhere the negative electrode active material to the current collector. The binder may be a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

If an aqueous binder is used as the negative electrode binder, a cellulose-based compound capable of imparting or increasing viscosity may be further included. As the cellulose-based compound, one or more of carboxymethyl cellulose, hydroxypropylmethyl cellulose, methyl cellulose, or alkali metal salts thereof may be mixed and used. The alkali metal may be Na, K, and/or Li.

The dry binder may be a polymer material capable of becoming fiber (e.g., capable of being fiberized), and may be, for example, polytetrafluoroethylene, polyvinylidene fluoride, a polyvinylidene fluoride-hexafluoropropylene copolymer, polyethylene oxide, or a combination thereof.

### Conductive Material

The conductive material is included to provide electrode conductivity (e.g., to increase electrical conductivity) and any suitable electrically conductive material may be used as a conductive material unless it causes a chemical change (e.g., causes an undesirable chemical change in the rechargeable lithium battery). Examples of the conductive material include a carbon-based material such as natural graphite, artificial graphite, carbon black, acetylene black, ketjen black, a carbon fiber, a carbon nanofiber, a carbon nanotube, and the like; a metal-based material of a metal powder and/or a metal fiber including copper, nickel, aluminum silver, and the like; a conductive polymer (e.g., an electrically conductive polymer) such as a polyphenylene derivative; or a mixture thereof.

A content of the negative electrode active material may be about 95 wt% to about 99.5 wt% based on 100 wt% of the negative electrode active material layer, and a content of the binder may be about 0.1 wt% to about 5 wt% based on 100 wt% of the negative electrode active material layer. For example, the negative electrode active material layer may include about 90 wt% to about 99 wt% of the negative electrode active material, about 0.1 wt% to about 5 wt% of the binder, and about 0.1 wt% to about 5 wt% of the conductive material.

### Negative Electrode Coating Layer

The precipitation-type negative electrode does not include a negative electrode active material during battery assembly, but may refer to a negative electrode in which lithium metal, etc. is precipitated or electrodeposited on the negative electrode during battery charging, thereby serving as a negative electrode active material.

The precipitation-type negative electrode may include a current collector and a negative electrode coating layer on the current collector. In a rechargeable lithium battery having such a precipitation-type negative electrode, initial charging begins in the absence of a negative electrode active material, and during charging, a high density of lithium metal is deposited or electrodeposited between the current collector and the negative electrode coating layer or on the negative electrode coating layer, thereby forming a lithium metal layer, which can serve as a negative electrode active material. Accordingly, in a rechargeable lithium battery that has been charged one or more times, the precipitation-type negative electrode may include, for example, a current collector, a lithium metal layer on the current collector, and a negative electrode coating layer on the lithium metal layer.

The lithium metal layer may refer to a layer in which lithium metal, etc. is precipitated during the charging process of the battery, and may be referred to as a metal layer, lithium layer, lithium electrodeposition layer, or negative electrode active material layer.

The negative electrode coating layer may be referred to as a lithium electrodeposition inducing layer or a cathode catalyst layer, and may include metal, carbon material, or a combination thereof.

The metal may be a lithiophilic metal and may include, for example, gold, platinum, palladium, silicon, silver, aluminum, bismuth, tin, zinc, or a combination thereof, and may be composed of one of these and/or various suitable types (or kinds) of alloys thereof. If the lithiophilic metal exists in particle form, its average particle diameter (D₅₀) may be less than or equal to about 4 µm, for example, about 10 nm to about 4 µm.

The carbon material may be, for example, crystalline carbon, amorphous carbon, or a combination thereof. The crystalline carbon may be, for example, natural graphite, artificial graphite, mesophase carbon microbeads, or a combination thereof. The amorphous carbon may be, for example, carbon black, activated carbon, acetylene black, denka black, ketjen black, or a combination thereof.

If the negative electrode coating layer includes both the metal and the carbon material, the mixing ratio of the metal and the carbon material may be, for example, a weight ratio of about 1:10 to about 2:1. In embodiments, precipitation of lithium metal can be effectively promoted and the characteristics of the all-solid-state rechargeable battery can be improved. For example, the negative electrode coating layer may include a carbon material on which a catalyst metal is supported, and/or may include a mixture of metal particles and carbon material particles.

For example, the negative electrode coating layer may include the lithiophilic metal and amorphous carbon, and in embodiments, it can effectively promote precipitation of lithium metal. As an example, the negative electrode coating layer may include a composite in which a lithiophilic metal is supported on amorphous carbon.

The negative electrode coating layer may further include a binder, and the binder may be, for example, a conductive binder (e.g., an electrically conductive binder). In embodiments, the negative electrode coating layer may further include general additives such as a filler, a dispersant, an ion conductive agent, and/or the like.

A thickness of the negative electrode coating layer may be, for example, about 100 nm to about 20 µm, or about 500 nm to about 10 µm, or about 1 µm to about 5 µm.

### Positive Electrode Active Material Layer

As an example, the aforementioned electrode for a rechargeable lithium battery may be a positive electrode, the current collector may be a positive electrode current collector, and the electrode active material layer may be a positive electrode active material layer.

The positive electrode active material layer includes a positive electrode active material and may optionally include a binder and/or a conductive material (e.g., an electrically conductive material).

### Positive Electrode Active Material

The positive electrode active material may include a compound (lithiated intercalation compound) capable of intercalating and deintercalating lithium. For example, at least one selected from a composite oxide of lithium and a metal selected from cobalt, manganese, nickel, and combinations thereof may be used.

The composite oxide may be a lithium transition metal composite oxide, and examples thereof may include lithium nickel-based oxide, lithium cobalt-based oxide, lithium manganese-based oxide, lithium iron phosphate-based compound, cobalt-free nickel-manganese-based oxide, overlithiated layered oxide, or a combination thereof.

As an example, the positive electrode active material may be a high nickel-based positive electrode active material having a nickel content of greater than or equal to about 80 mol% based on 100 mol% of metals excluding lithium in the lithium transition metal composite oxide. The nickel content in the high nickel-based positive electrode active material may be greater than or equal to about 85 mol%, greater than or equal to about 90 mol%, greater than or equal to about 91 mol%, or greater than or equal to about 94 mol% and less than or equal to about 99 mol% based on 100 mol% of metals excluding lithium. The high-nickel-based positive electrode active materials can achieve high capacity and can be applied to high-capacity, high-energy-density rechargeable lithium batteries.

As an example, a compound represented by any of the following chemical formulas may be used. LiₐA_{1-b}X_{b}O_{2-c}D_{c} (0.90 ≤ a ≤ 1.8, 0 ≤ b ≤ 0.5, 0 ≤ c ≤ 0.05); LiₐMn_{2-b}X_{b}O_{4-c}D_{c} (0.90 ≤ a ≤ 1.8, 0 ≤ b ≤ 0.5, 0 ≤ c ≤ 0.05); LiₐNi_{1-b-c}Co_{b}X_{c}O_{2- α} D _{α} (0.90 ≤ a ≤ 1.8, 0 ≤ b ≤ 0.5, 0 ≤ c ≤ 0.5, 0 < a < 2);LiₐNi_{1-b-c}Mn_{b}X_{c}O_{2- α} D _{α} (0.90 ≤ a ≤ 1.8, 0 ≤ b ≤ 0.5, 0 ≤ c ≤ 0.5, 0 < a < 2);LiₐNi_{b}Co_{c}L¹_{d}GₑO₂ (0.90 ≤ a ≤ 1.8, 0 ≤ b ≤ 0.9, 0 ≤ c ≤ 0.5, 0 ≤ d ≤ 0.5, 0 ≤ e ≤ 0.1); LiₐNiG_{b}O₂ (0.90 ≤ a ≤ 1.8, 0.001 ≤ b ≤ 0.1); LiₐCoG_{b}O₂ (0.90 ≤ a ≤ 1.8, 0.001 ≤ b ≤ 0.1); LiₐMn_{1-b}G_{b}O₂ (0.90 ≤ a ≤ 1.8, 0.001 ≤ b ≤ 0.1); LiₐMn₂G_{b}O₄ (0.90 ≤ a ≤ 1.8, 0.001 ≤ b ≤ 0.1); LiₐMn_{1-g}G_{g}PO₄ (0.90 ≤ a ≤ 1.8, 0 ≤ g ≤ 0.5); Li_{(3-f)}Fe₂(PO₄)₃ (0 ≤ f ≤ 2); and LiₐFePO₄ (0.90 ≤ a ≤ 1.8)

In the above chemical formulas, A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; Q is Ti, Mo, Mn, or a combination thereof; Z is Cr, V, Fe, Sc, Y, or a combination thereof; and L¹ is Mn, Al, or a combination thereof.

The positive electrode active material may be in the form of secondary particles made by agglomerating a plurality of primary particles, or may be in the form of single particles. In embodiments, the positive electrode active material may have a spherical or close to spherical shape, or may have a polyhedral or irregular shape.

In embodiments, the positive electrode active material may include a buffer layer on the particle surface. The buffer layer can be expressed as a coating layer, a protective layer, etc., and can play a role in lowering the interfacial resistance (e.g., interfacial electrical resistance) between the positive electrode active material and the sulfide-based solid electrolyte particles. As an example, the buffer layer may include lithium-metal-oxide, wherein the metal may be, for example, one or more elements selected from Al, B, Ca, Ce, Cr, Fe, Mg, Mo, Nb, Si, Sn, Sr, Ta, V, W, and Zr. The lithium-metal-oxide is excellent for improving the performance of the positive electrode active material by facilitating the movement of lithium ions and electronic conduction, while lowering the interfacial resistance (e.g., interfacial electrical resistance) between the positive electrode active material and solid electrolyte particles.

The positive electrode active material may be included in an amount of about 55 wt% to about 99.5 wt%, for example, about 65 wt% to about 95 wt%, or about 75 wt% to about 91 wt%, based on 100 wt% of the positive electrode active material layer. Binder

The binder improves binding properties of positive electrode active material particles with one another and with a current collector. Examples of binders may include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but are not limited thereto.

### Conductive Material

The conductive material is included to provide electrode conductivity (e.g., to provide or increase electrical conductivity) and any suitable electrically conductive material may be used as a conductive material unless it causes a chemical change (e.g., an undesirable chemical change in the rechargeable lithium battery). Examples of the conductive material may include a carbon-based material such as natural graphite, artificial graphite, carbon black, acetylene black, ketjen black, a carbon fiber, a carbon nanofiber, a carbon nanotube, and the like; a metal-based material of a metal powder and/or a metal fiber including copper, nickel, aluminum, silver, and the like; a conductive polymer (e.g., an electrically conductive polymer) such as a polyphenylene derivative; or a mixture thereof.

Each content of the binder and the conductive material may be about 0.1 wt% to about 5 wt% based on 100 wt% of the positive electrode active material layer.

The positive electrode current collector may include Al, SUS, and/or the like, but it is not limited thereto.

### Rechargeable Lithium Battery

Some embodiments provide a rechargeable lithium battery including the aforementioned electrode and electrolyte. The rechargeable lithium battery may be a lithium ion battery using an electrolyte solution, or as another example, it may be an all-solid-state rechargeable battery using a solid electrolyte. As an example, a rechargeable lithium battery using an electrolyte will be described.

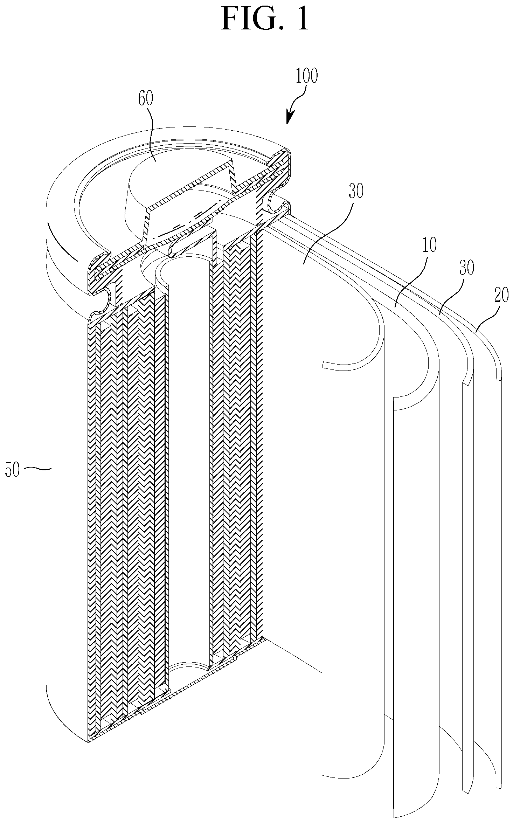

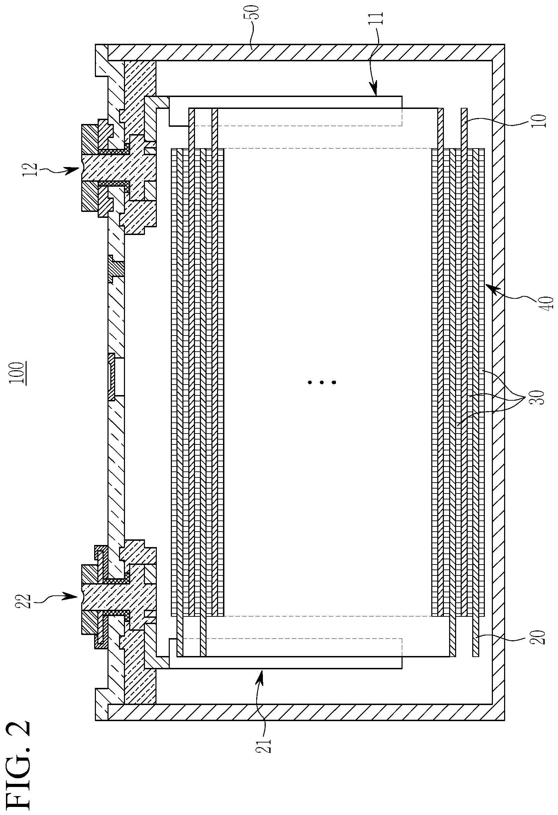

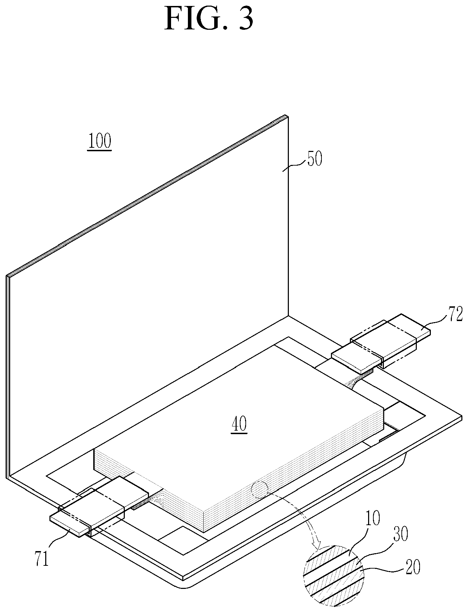

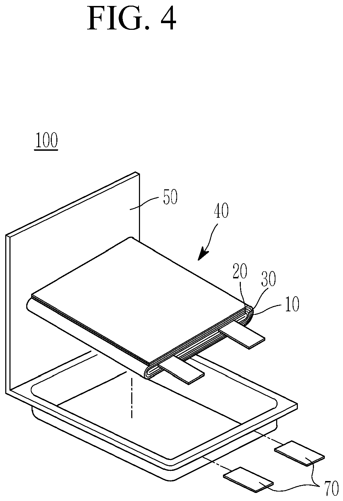

The rechargeable lithium battery may be classified into cylindrical, prismatic, pouch, coin, etc. depending on the shape. FIGS. 1-4 are schematic diagrams showing the rechargeable lithium batteries according to some embodiments, where FIG. 1 is a cylindrical battery, FIG. 2 is a prismatic battery, and FIGS. 3-4 are each a pouch-shaped battery. Referring to FIGS. 1-4, the rechargeable lithium battery 100 includes an electrode assembly 40 with a separator 30 between the positive electrode 10 and the negative electrode 20, and a case 50 in which the electrode assembly 40 is housed. The positive electrode 10, the negative electrode 20, and the separator 30 may be impregnated with an electrolyte solution. The rechargeable lithium battery 100 may include a sealing member 60 that seals the case 50 as shown in FIG. 1. In FIG. 2, the rechargeable lithium battery 100 may include a positive electrode lead tab 11, a positive electrode terminal 12, a negative lead tab 21, and a negative electrode terminal 22. As shown in FIGS. 3-4, the rechargeable lithium battery 100 includes an electrode tab 70, that is, a positive electrode tab 71 and a negative electrode tab 72 serving as an electrical path for inducing the current formed in the electrode assembly 40 to the outside.

### Electrolyte

For example, the electrolyte for a rechargeable lithium battery may be an electrolyte, which may include a non-aqueous organic solvent and a lithium salt.

The non-aqueous organic solvent serves as a medium that transmits ions taking part in the electrochemical reaction of a battery. The non-aqueous organic solvent may be a carbonate-based, ester-based, ether-based, ketone-based, and/or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethyl acetate, methyl propionate, ethyl propionate, decanolide, mevalonolactone, valerolactone, caprolactone, and/or the like. The ether-based solvent may include dibutyl ether, tetraglyme, diglyme, dimethoxyethane, 2-methyltetrahydrofuran, 2,5-dimethyltetrahydrofuran, tetrahydrofuran, and/or the like. In embodiments, the ketone-based solvent may include cyclohexanone, and/or the like. The alcohol-based solvent may include ethanol, isopropyl alcohol, and/or the like and the aprotic solvent may include nitriles such as R-CN (wherein R is a C2 to C20 linear, branched, or cyclic hydrocarbon group, a double bond, an aromatic ring, and/or an ether group), and/or the like; amides such as dimethylformamide; dioxolanes such as 1,3-dioxolane, 1,4-dioxolane, and/or the like; sulfolanes, and/or the like.

The non-aqueous organic solvent can be used alone or in a mixture of two or more types (or kinds), and if two or more types (or kinds) are used in a mixture, a mixing ratio can be suitably or appropriately adjusted according to suitable or desired battery performance, which should be readily apparent upon reviewing this disclosure.

If using a carbonate-based solvent, a cyclic carbonate and a chain carbonate may be mixed together and used, and the cyclic carbonate and the chain carbonate may be mixed together in a volume ratio of about 1:1 to about 1:9.

The non-aqueous organic solvent may further include an aromatic hydrocarbon-based organic solvent. For example, a carbonate-based solvent and an aromatic hydrocarbon-based organic solvent may be mixed together and used in a volume ratio of about 1:1 to about 30:1.

The electrolyte may further include vinylethyl carbonate, vinylene carbonate, and/or an ethylene carbonate-based compound to improve battery cycle-life.

Examples of the ethylene carbonate-based compound may include fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the organic solvent supplies lithium ions in a battery, enables a basic operation of a rechargeable lithium battery, and improves transportation of the lithium ions between positive and negative electrodes. Examples of the lithium salt may include at least one selected from LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl) imide; LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethane sulfonate, lithium difluorobis(oxalato) phosphate (LiDFBOP), lithium difluoro(oxalato) borate (LiDFOB), and lithium bis(oxalato) borate (LiBOB).

A concentration of lithium salt may be within the range of about 0.1 M to about 2.0 M. If the concentration of lithium salt is within the above range, the electrolyte has suitable or appropriate ionic conductivity and viscosity, and thus excellent performance can be achieved and lithium ions can move effectively.

### Separator

Depending on the type (or kind) of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and/or the like.

The separator may include a porous substrate and a coating layer including an organic material, an inorganic material, or a combination thereof on one or both surfaces of the porous substrate.

The porous substrate may be a polymer film formed of any one polymer selected from polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, and/or a copolymer or mixture of two or more thereof.

The porous substrate may have a thickness of about 1 µm to about 40 µm, for example, about 1 µm to about 30 µm, about 1 µm to about 20 µm, about 5 µm to about 15 µm, or about 10 µm to about 15 µm.

The organic material may include a (meth)acrylic copolymer including a first structural unit derived from (meth)acrylamide, and a second structural unit including at least one selected from a structural unit derived from (meth)acrylic acid or (meth)acrylate, and a structural unit derived from (meth)acrylamidosulfonic acid or a salt thereof.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto. An average particle diameter (D₅₀) of the inorganic particles may be about 1 nm to about 2000 nm, for example, about 100 nm to about 1000 nm, or about 100 nm to about 700 nm.

The organic material and the inorganic material may be mixed together in one coating layer, or a coating layer including an organic material and a coating layer including an inorganic material may be stacked.

The thickness of the coating layer may be about 0.5 µm to about 20 µm, for example, about 1 µm to about 10 µm, or about 1 µm to about 5 µm.

Examples and comparative examples of the present disclosure are described below. However, the following examples are only examples of the present disclosure, and the present disclosure is not limited to the following examples.

### Example 1

### 1. Manufacturing of Functional Polymer

Lithium-containing poly-(2-ethyl-2-oxazoline) (Li-POX) was polymerized by adding 3 M LiFSI lithium salt to 2-ethyl-2-oxazoline, which was a liquid monomer, and completely dissolving it therein and then, heating the solution at 60 °C, until the polymerization was completed. The functional polymer (Li-POX) polymerized by initiation of the lithium salt was dissolved at a concentration of 0.5 wt% in a solvent of acetone and IPA in a volume ratio of 5:5, thereby preparing a polymer solution.

### 2. Manufacturing of Negative Electrode

97 wt% of graphite negative electrode active material, 1.7 wt% of carboxymethyl cellulose, 0.8 wt% of styrene butadiene rubber, and 0.5 wt% of acetylene black were mixed together in a water solvent, thereby preparing negative electrode active material layer slurry. The negative electrode active material layer slurry was coated on a copper foil current collector and then, dried and compressed to form a graphite-based negative electrode active material layer on a current collector.

On the surface of the negative electrode active material layer, the prepared polymer solution was coated in an electrospinning method. Subsequently, drying at 60 °C for 12 hours was performed, manufacturing a negative electrode having a functional layer formed on the negative electrode active material layer. The electrospinning method was set as follows. TCD (tip to collector distance) was 9 cm, a tip size was No. 21, a voltage of 25 kV was applied, a flow rate was 4 mL/hr, and spinning time was 2 minutes.

### 3. Manufacturing of Rechargeable Lithium Battery Cell

After manufacturing a unit cell by using a lithium metal as a counter electrode and interposing a polytetrafluoroethylene separator between the negative electrode and the counter electrode, the unit cell was inserted into a case, and an electrolyte solution prepared by dissolving 1.15 M LiPF₆ in a mixed solvent of ethylene carbonate, ethylmethyl carbonate, and diethyl carbonate in a volume ratio of 2:4:4 was injected into the case, thereby manufacturing a rechargeable lithium battery cell (half-cell) in a common method.

### Comparative Example 1

A negative electrode and a rechargeable lithium battery cell were manufactured substantially in the same manner as in Example 1 except that the functional layer was not formed on the negative electrode active material layer.

### Evaluation Example 1: IR Analysis of Functional Polymer

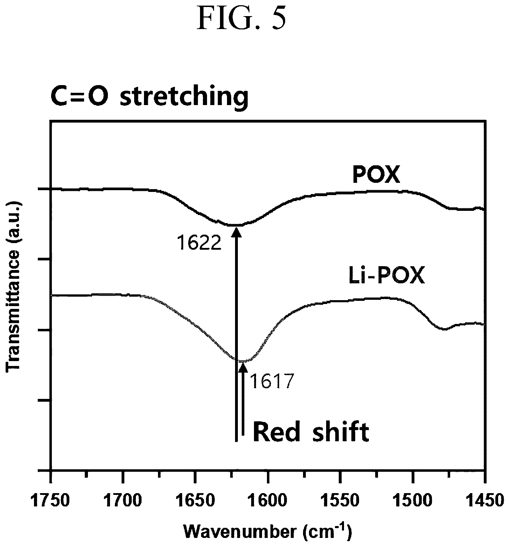

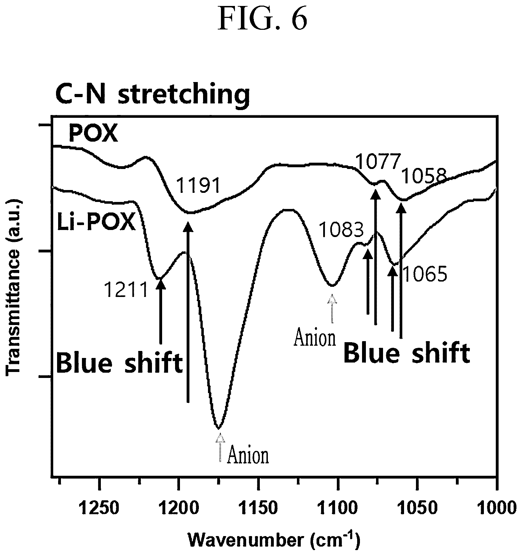

In order to examine characteristics of the functional polymer (Li-POX) polymerized by initiation of lithium salt according to Example 1, Li-POX and poly-(2-ethyl-2-oxazoline) (POX) polymerized without Li-POX and lithium salt in a common method were respectively subject to infrared spectroscopy, and then, a peak corresponding to C=O stretching is shown in FIG. 5, and a peak corresponding to C-N stretching is shown in FIG. 6.

Referring to FIG. 5, Li-POX according to the example, compared with POX, exhibited a red shift phenomenon in the peak corresponding to the C=O stretching, which is understood to be due to bonding between oxygen and lithium cations. In addition, referring to FIG. 6, Li-POX according to the example, compared with POX, exhibited a blue shift phenomenon in the peak corresponding to the C-N stretching, which is understood to be caused due to bonding between nitrogen and anions of lithium salt.

### Evaluation Example 2: Analysis of Changes in SEI components after Formation Process

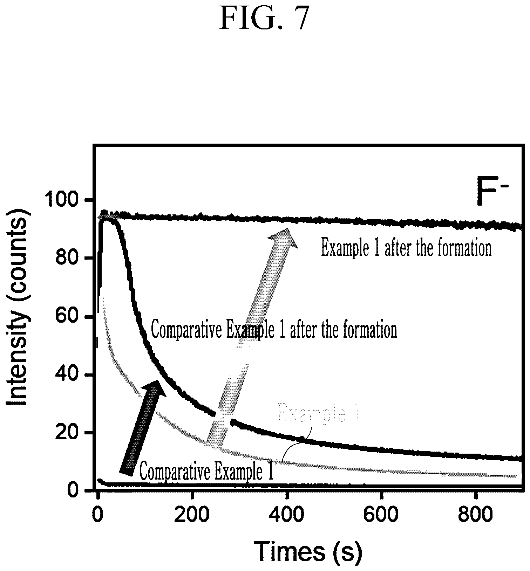

The rechargeable lithium battery cells of Example 1 and Comparative Example 1 were respectively charged to 0.01 V at a constant current of 0.1 C and discharged to 1.5 V at the constant current of 0.2 C at 25 °C to proceed with initial charge and discharge, that is, a formation process. Each negative electrode surface before and after the formation process was subject to time-of-flight-secondary ion mass spectrometry (ToF-SIMS) Depth analysis to analyze component changes of the SEI, and the results are shown in FIG. 7. Graphs of FIG. 7 all exhibit intensity of fluorine ions (F⁻). In FIG. 7, a gray graph shows Comparative Example 1 before the formation, and a black graph shows Comparative Example 1 after the formation. A light yellow graph shows Example 1 before the formation, and an orange graph shows Example 1 after the formation. Example 1, in which a functional layer according to some embodiments was introduced to the negative electrode surface, exhibited strong F⁻ intensity on the negative electrode surface after the formation process. Accordingly, the introduced functional layer was confirmed to form an LiF-rich SEI after the formation process.

### Evaluation Example 3: Evaluation of Rapid Charging Cycle-life Characteristics

In Example 1 and Comparative Example 1, a positive electrode manufactured as follows was used instead of the lithium metal. The positive electrode was manufactured by mixing 96 wt% of a LiNi_{0.78}Co_{0.2}Al_{0.02}O₂ positive electrode active material, 2.0 wt% of a polyvinylidene fluoride binder, and 2.0 wt% of an acetylene black conductive material to prepare positive electrode active material layer slurry, coating the positive electrode active material layer slurry on an aluminum foil current collector, and then, drying and compressing it.

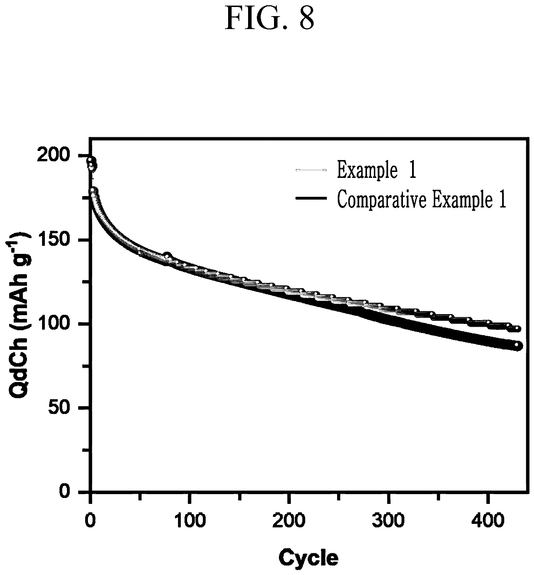

The full cells of Example 1 and Comparative Example 1 were charged to 4.25 V at a constant current of 0.1 C and to 0.05 C at the constant voltage and then, discharged to 2.8 V at 0.1 C at 25 °C for initial charge and discharge and subsequently, 400 times or more charged and discharged at 1 C/1 C within a voltage range of 2.8 V to 4.25 V at 25 °C to evaluate cycle-life characteristics, and the results are shown as specific capacity changes according the number of cycles in FIG. 8.

Referring to FIG. 8, Example 1, compared with Comparative Example 1, exhibited improved long-term cycle-life characteristics. Accordingly, a rechargeable lithium battery cell, into which a functional layer according to some embodiments was introduced, exhibited improved cycle-life characteristics under rapid charging conditions, which is understood to be because the rapid charging increased reversibility of lithium precipitated in electrodes and led to change a composition of SEI and thereby, reduced a side reaction between electrodes and electrolyte solution.

While the subject matter of this disclosure has been described in connection with what is presently considered to be practical example embodiments, it is to be understood that the present disclosure is not limited to the disclosed embodiments. On the contrary, it is intended to cover various modifications and equivalent arrangements included within the spirit and scope of the appended claims, and equivalents thereof.

### Description of Symbols

100: rechargeable lithium battery 10: positive electrode
11: positive electrode lead tab 12: positive terminal
20: negative electrode 21: negative electrode lead tab
22: negative terminal 30: separator
40: electrode assembly 50: case
60: sealing member 70: electrode tab
71: positive electrode tab 72: negative electrode tab

## Claims

1. An electrode for a rechargeable lithium battery (100), comprising:
a current collector,
an electrode active material layer on the current collector, and
a functional layer,
wherein the functional layer comprises a lithium-containing polyoxazoline.

2. The electrode as claimed in claim 1, wherein:
the functional layer is on the electrode active material layer and/or is between the current collector and the electrode active material layer.

3. The electrode as claimed in claim 1 or 2, wherein:
the functional layer has a thickness of 5 nm to 900 nm.

4. The electrode as claimed in any of claims 1 to 3, wherein:
the functional layer is coated by electrospinning.

5. The electrode as claimed in any of claims 1 to 4, wherein:
the lithium-containing polyoxazoline is a polyoxazoline initiated with a lithium salt.

6. The electrode as claimed in claim 5, wherein:
the lithium salt comprises LiPF₆, LiBF₄, LiSbF₆, LiAsF₆, LiClO₄, LiAlO₂, LiAlCl₄, LiPO₂F₂, LiCl, Lil, LiFSI, LiTFSI, LiOTf, LiBOB, LiDFOB, or a combination thereof.

7. The electrode as claimed in any of claims 1 to 6, wherein:
the lithium-containing polyoxazoline comprises lithium-containing poly(2-alkyl-2-oxazoline), lithium-containing poly(2-aryl-2-oxazoline), or a combination thereof,
wherein the alkyl is a substituted or unsubstituted C1 to C10 alkyl and the aryl is a substituted or unsubstituted C6 to C20 aryl.

8. The electrode as claimed in any of claims 1 to 7, wherein:
the lithium-containing polyoxazoline comprises lithium-containing poly(2-methyl-2-oxazoline), lithium-containing poly(2-ethyl-2-oxazoline), lithium-containing poly(2-propyl-2-oxazoline), lithium-containing poly(2-isopropyl-2-oxazoline), lithium-containing poly(2-cyclopropyl-2-oxazoline), or a combination thereof.

9. The electrode as claimed in any of claims 1 to 8, wherein:
the lithium-containing polyoxazoline has a weight average molecular weight (Mw) of 500 g/mol to 500,000 g/mol.

10. The electrode as claimed in any of claims 1 to 9, wherein:
the lithium-containing polyoxazoline has a polydispersity (PDI; M_{w}/Mₙ) of 1 to 4.

11. The electrode as claimed in any of claims 1 to 10, wherein:
the electrode is a negative electrode, and
the electrode active material layer is a negative electrode active material layer or a negative electrode coating layer.

12. The electrode as claimed in claim 11, wherein:
the electrode active material layer is a negative electrode active material layer, and the negative electrode active material layer comprises a lithium metal, a lithium alloy, a carbon-based negative electrode active material, a silicon-based negative electrode active material, or a combination thereof.

13. The electrode as claimed in claim 11 or 12, wherein:
the electrode active material layer is a negative electrode coating layer, and
the negative electrode coating layer comprises a lithiophilic metal, a carbon material, or a combination thereof, and
a lithium metal layer is formed between the current collector and the negative electrode coating layer by charging.

14. A rechargeable lithium battery (100) comprising the electrode as claimed in any of claims 1 to 13 and an electrolyte.

15. The rechargeable lithium battery (100) as claimed in claim 14, wherein:
the electrode as claimed in any of claims 1 to 13 is a negative electrode, and
the rechargeable lithium battery (100) further comprises a positive electrode (10) facing the negative electrode; and/or, wherein
the electrode as claimed in any of claims 1 to 13 is a negative electrode, and
the rechargeable lithium battery (100) further comprises a separator (30) between a positive electrode (10) and the negative electrode.
